# EUROPÄISCHE PATENTANMELDUNG

(11) **EP 3 239 535 A1**
(43) Veröffentlichungstag der Anmeldung: **01.11.2017**
(21) Anmeldenummer: 16167108.6
(22) Anmeldetag: 26.04.2016
(51) Int. Cl.: F16B 5/02, F16B 35/04

(54) **BEFESTIGUNGSVORRICHTUNG UND SYSTEM**

(71) Anmelder: HILTI Aktiengesellschaft, 9494 Schaan (LI)
(72) Erfinder: Popp, Uwe, 9443 Widnau (CH); Trebo, Berndt, 6972 Fussach (AT); von Monkiewitsch, Matthias, 6900 Bregenz (AT)
(74) Vertreter: Hilti Aktiengesellschaft Corporate Intellectual Property

(57) **Zusammenfassung**

Vorrichtung 220 und System zur Befestigung eines ersten Gegenstandes 201 an einem zweiten Gegenstand 202, mit einem Kopf 230 und einem von dem Kopf in einer Befestigungsrichtung 210 abragenden Schaft 240 für eine unmittelbare Befestigung an dem zweiten Gegenstand, wobei der Kopf eine in die Befestigungsrichtung weisende Auflagefläche 250 für eine Auflage auf dem ersten Gegenstand aufweist, welche in der Befestigungsrichtung nur von dem Schaft überragt wird, wobei der Schaft eine in die Befestigungsrichtung weisende Anlagefläche 280 für eine Anlage an dem zweiten Gegenstand aufweist, wobei der Schaft einen den übrigen Schaft quer zur Befestigungsrichtung überragenden Stützbund 270 aufweist, welcher in der Befestigungsrichtung zur Anlagefläche einen kleineren Abstand aufweist als zur Auflagefläche.

## Beschreibung

### Technisches Gebiet

Die Erfindung betrifft eine Befestigungsvorrichtung sowie ein System mit einem ersten Gegenstand, einem zweiten Gegenstand und einer Befestigungsvorrichtung.

### Stand der Technik

Es sind Vorrichtungen zur Befestigung eines ersten Gegenstandes an einem zweiten Gegenstand bekannt, welche einen Kopf und einen von dem Kopf in einer Befestigungsrichtung abragenden Schaft aufweisen, wobei der Kopf eine in die Befestigungsrichtung weisende Auflagefläche für eine Auflage auf dem ersten Gegenstand aufweist, welche in der Befestigungsrichtung nur von dem Schaft überragt wird. Bekannt ist auch, dass der Schaft eine in die Befestigungsrichtung weisende Anlagefläche für eine Anlage an dem zweiten Gegenstand aufweist.

In dem Fall, dass der erste Gegenstand Ausgleichsbewegungen macht, kann es vorkommen, dass der erste Gegenstand an den Schaft stösst. Durch die dabei auftretenden Kräfte oder Drehmomente wird unter Umständen die Verbindung zwischen der Vorrichtung und dem zweiten Gegenstand oder die Vorrichtung selbst beschädigt.

### Darstellung der Erfindung

Aufgabe der Erfindung ist es, eine Vorrichtung und ein System zur Verfügung zu stellen, mit denen eine robuste Befestigung eines ersten Gegenstands an einem zweiten Gegenstand möglich ist.

Die Aufgabe wird dadurch gelöst, dass der Schaft einen den übrigen Schaft quer zur Befestigungsrichtung überragenden Stützbund aufweist, welcher in der Befestigungsrichtung zur Anlagefläche einen kleineren Abstand aufweist als zur Auflagefläche. Dadurch, dass der Stützbund den übrigen Schaft quer zur Befestigungsrichtung überragt, ist gewährleistet, dass der erste Gegenstand im Falle von Ausgleichsbewegungen quer zur Befestigungsrichtung an dem Stützbund anstösst und gegen eine weitere Bewegung auf den Schaft zu abgestützt wird. Dadurch, dass der Stützbund und insbesondere dessen Anstossstelle des ersten Gegenstands in der Befestigungsrichtung zur Anlagefläche einen kleineren Abstand aufweist als zur Auflagefläche, ist gewährleistet, dass die auftretenden Kräfte oder Drehmomente relativ gering sind. Somit wird eine robuste Befestigung des ersten Gegenstands an dem zweiten Gegenstand erreicht.

Die Richtungsangabe "quer zur Befestigungsrichtung" bezeichnet im Sinne der Erfindung eine beliebige zur Befestigungsrichtung geneigte, insbesondere rechtwinklig geneigte Richtung.

Eine bevorzugte Ausführungsform ist dadurch gekennzeichnet, dass die Auflagefläche den Stützbund quer zur Befestigungsrichtung überragt. Dadurch ist ein Einklemmen des ersten Gegenstands zwischen der Auflagefläche und dem zweiten Gegenstand möglich.

Eine bevorzugte Ausführungsform ist dadurch gekennzeichnet, dass der Schaft ein Befestigungsteil für eine unmittelbare Befestigung an dem zweiten Gegenstand und ein von dem Befestigungsteil separates Anbauteil für eine unmittelbare Befestigung an dem Befestigungsteil umfasst. Besonders bevorzugt weist das Befestigungsteil den Stützbund auf. Alternativ weist das Anbauteil den Stützbund auf.

Eine bevorzugte Ausführungsform ist dadurch gekennzeichnet, dass der Stützbund die Anlagefläche aufweist. Hierdurch wird eine weitere Reduktion der auftretenden Kräfte oder Drehmomente erreicht.

Eine bevorzugte Ausführungsform ist dadurch gekennzeichnet, dass der Schaft ein Kernteil und ein das Kernteil umschliessendes Ringteil umfasst, wobei das Ringteil den Stützbund aufweist.

Eine bevorzugte Ausführungsform ist dadurch gekennzeichnet, dass der Stützbund quer zur Befestigungsrichtung einen kreisringförmigen Umfang aufweist.

Die Aufgabe wird ebenfalls gelöst durch ein System, umfassend einen ersten Gegenstand, einen zweiten Gegenstand und eine Vorrichtung, wobei der erste Gegenstand mittels der Vorrichtung in einer Befestigungsrichtung an dem zweiten Gegenstand befestigt ist, wobei die Vorrichtung einen Kopf und einen von dem Kopf in der Befestigungsrichtung abragenden Schaft aufweist, wobei der Kopf eine in die Befestigungsrichtung weisende Auflagefläche aufweist, welche auf dem ersten Gegenstand aufliegt, wobei zwischen dem Schaft, der Auflagefläche, dem ersten Gegenstand und dem zweiten Gegenstand ein Raum für Ausgleichsbewegungen des ersten Gegenstands quer zur Befestigungsrichtung gebildet ist, dadurch gekennzeichnet, dass der Schaft einen den Raum quer zur Befestigungsrichtung begrenzenden Stützbund aufweist, welcher in der Befestigungsrichtung zur Anlagefläche einen kleineren Abstand aufweist als zur Auflagefläche. Dadurch, dass der Stützbund und insbesondere dessen Anstossstelle des ersten Gegenstands in der Befestigungsrichtung zur Anlagefläche einen kleineren Abstand aufweist als zur Auflagefläche, ist gewährleistet, dass die auftretenden Kräfte oder Drehmomente relativ gering sind. Somit wird eine robuste Befestigung des ersten Gegenstands an dem zweiten Gegenstand erreicht.

Eine bevorzugte Ausführungsform ist dadurch gekennzeichnet, dass der erste Gegenstand ein Gitterrost ist.

Eine bevorzugte Ausführungsform ist dadurch gekennzeichnet, dass der Stützbund als grösste Ausdehnung quer zur Befestigungsrichtung eine Breite a hat und der Gitterrost zwei zueinander parallele Gitterroststäbe mit einem Abstand b zueinander aufweist, zwischen denen die Vorrichtung angeordnet ist, und wobei die Breite a kleiner als der Abstand b ist. Dadurch ist die Möglichkeit von Ausgleichsbewegungen des ersten Gegenstands auf den Schaft zu gewährleistet. Besonders bevorzugt beträgt die Breite a höchstens das 0,8-fache des Abstands b. Ebenfalls bevorzugt ist die Breite a mindestens halb so gross wie der Abstand b.

Eine bevorzugte Ausführungsform ist dadurch gekennzeichnet, dass der erste Gegenstand unmittelbar zwischen der Auflagefläche und dem zweiten Gegenstand eingeklemmt ist.

Eine bevorzugte Ausführungsform ist dadurch gekennzeichnet, dass der erste Gegenstand unmittelbar zwischen der Auflagefläche und dem Stützbund eingeklemmt ist. Dadurch wird die Kraft, die von der Auflagefläche auf den ersten Gegenstand ausgeübt wird, auf den Stützbund übertragen, was die auftretenden Kräfte oder Drehmomente zusätzlich reduziert.

### Ausführungsbeispiele

Die Erfindung wird nachstehend anhand von Ausführungsbeispielen unter Bezugnahme auf die Zeichnungen näher erläutert. Es zeigen:
- Fig. 1: ein System mit einem ersten Gegenstand und einem zweiten Gegenstand jeweils im Querschnitt sowie mit einer Vorrichtung zur Befestigung des ersten Gegenstands an dem zweiten Gegenstand und
- Fig. 2: ein System mit einem ersten Gegenstand und einem zweiten Gegenstand jeweils im Querschnitt sowie mit einer alternativen Vorrichtung zur Befestigung des ersten Gegenstands an dem zweiten Gegenstand.

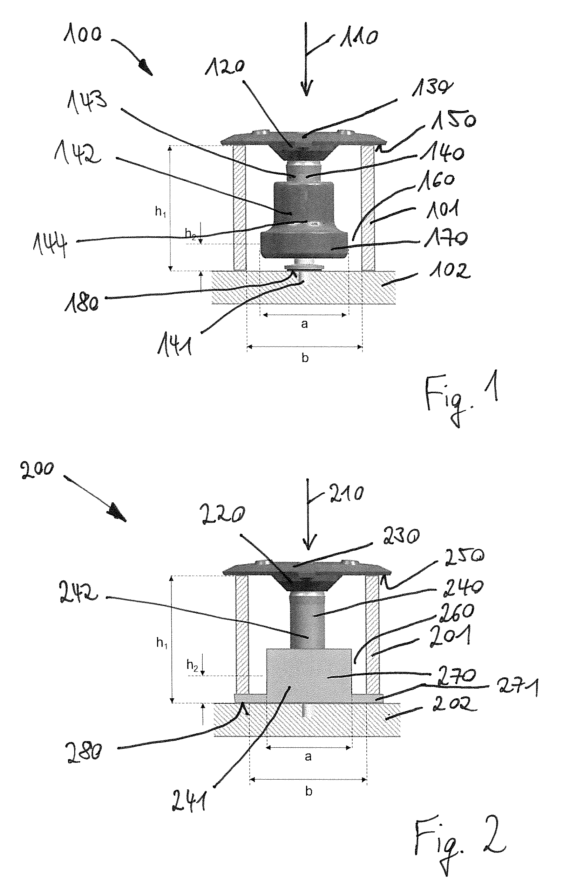

In Fig. 1 ist ein System 100 dargestellt, das einen ersten Gegenstand 101, einen zweiten Gegenstand 102 und eine Vorrichtung 120, mittels welcher der erste Gegenstand 101 in einer Befestigungsrichtung 110 an dem zweiten Gegenstand 102 befestigt ist. Die Vorrichtung 120 weist einen Kopf 130 und einen von dem Kopf 130 in der Befestigungsrichtung 110 abragenden Schaft 140 auf. Der Schaft 140 weist eine Anlagefläche 180 auf, welche in der Befestigungsrichtung 110 an dem zweiten Gegenstand 102 anliegt. Der Kopf 130 weist eine in die Befestigungsrichtung 110 weisende Kopfunterseite oder Auflagefläche 150 auf, welche auf dem ersten Gegenstand 101 aufliegt und in der Befestigungsrichtung 110 zur Anlagefläche 180 einen Abstand h₁ aufweist.

Zwischen dem Schaft 140, der Auflagefläche 150, dem ersten Gegenstand 101 und dem zweiten Gegenstand 102 ist ein Raum 160 für Ausgleichsbewegungen des ersten Gegenstands 101 quer zur Befestigungsrichtung 110 gebildet. Der Schaft 140 weist einen Stützbund 170 auf, welcher den übrigen Schaft 140 quer zur Befestigungsrichtung 110 überragt, also die breiteste Stelle des Schaftes 140 umfasst. Der Stützbund 170 begrenzt den Raum 160 quer zur Befestigungsrichtung 110, so dass der erste Gegenstand 101 im Falle von Ausgleichsbewegungen gegenüber der Vorrichtung 120 an den Stützbund 170 und nicht an den übrigen Schaft 140 anstösst. Der Stützbund 170 weist in der Befestigungsrichtung 110 zur Anlagefläche 150 einen Abstand h₂ und zur Auflagefläche 150 einen Abstand h₁-h₂ auf, wobei h₂ < h₁-h₂. Dadurch stösst der erste Gegenstand 101 in der Nähe der Anlagefläche 180 an den Schaft 140, so dass die dabei auftretenden Kräfte oder Drehmomente relativ gering sind.

Der erste Gegenstand 101 umfasst vorliegend einen Gitterrost, von dem zwei zueinander parallele Gitterroststäbe mit einem Abstand b zueinander dargestellt sind, zwischen denen die Vorrichtung 120 angeordnet ist. Der Stützbund 170 hat als grösste Ausdehnung quer zur Befestigungsrichtung 110 eine Breite a, welche das 0,7-fache des Abstands b beträgt.

Die Auflagefläche 150 überragt den Stützbund 170 quer zur Befestigungsrichtung 110. Der erste Gegenstand 101 ist unmittelbar zwischen der Auflagefläche 150 und dem zweiten Gegenstand 102 eingeklemmt. Einer Ausgleichsbewegung des ersten Gegenstands 101 gegenüber der Vorrichtung 120 wirkt daher zunächst eine relativ kleine Kraft entgegen, nämlich die Reibungskraft aufgrund der Klemmung. Sobald der erste Gegenstand 101 an dem Stützbund 170 anstösst, wirkt der Ausgleichsbewegung eine relativ grosse Kraft entgegen, ohne dass die Vorrichtung 120 oder ihre Verbindung zu dem zweiten Gegenstand 102 beschädigt wird.

Der Schaft 140 umfasst ein Befestigungsteil 141 für eine unmittelbare Befestigung an dem zweiten Gegenstand, wie beispielsweise einen Nagel, eine Schraube, einen Dübel oder einen Gewindebolzen, und ein von dem Befestigungsteil 141 separates Anbauteil 142 für eine unmittelbare Befestigung an dem Befestigungsteil 141, beispielsweise durch Aufschrauben. Vorliegend weist das Anbauteil 142 den Stützbund 170 auf. Der Schaft 140 umfasst dabei ein Kernteil 143 und ein das Kernteil 143 umschliessendes Ringteil 144, wobei das Ringteil 144 den Stützbund 170 aufweist. Das Ringteil 144 ist beispielsweise auf das Kernteil 143 aufgesteckt oder aufgepresst. Der Stützbund 170 weist quer zur Befestigungsrichtung 110 einen kreisringförmigen Umfang auf.

In Fig. 2 ist ein System 200 dargestellt, das einen ersten Gegenstand 201, einen zweiten Gegenstand 202 und eine Vorrichtung 220, mittels welcher der erste Gegenstand 201 in einer Befestigungsrichtung 210 an dem zweiten Gegenstand 202 befestigt ist. Die Vorrichtung 220 weist einen Kopf 230 und einen von dem Kopf 230 in der Befestigungsrichtung 210 abragenden Schaft 240 auf. Der Schaft 240 weist eine Anlagefläche 280 auf, welche in der Befestigungsrichtung 210 an dem zweiten Gegenstand 202 anliegt. Der Kopf 230 weist eine in die Befestigungsrichtung 210 weisende Kopfunterseite oder Auflagefläche 250 auf, welche auf dem ersten Gegenstand 201 aufliegt und in der Befestigungsrichtung 210 zur Anlagefläche 280 einen Abstand h₁ aufweist.

Zwischen dem Schaft 240, der Auflagefläche 250, dem ersten Gegenstand 201 und dem zweiten Gegenstand 202 ist ein Raum 260 für Ausgleichsbewegungen des ersten Gegenstands 201 quer zur Befestigungsrichtung 210 gebildet. Der Schaft 240 weist einen Stützbund 270 auf, welcher den übrigen Schaft 240 quer zur Befestigungsrichtung 210 überragt, also die breiteste Stelle des Schaftes 240 umfasst. Der Stützbund 270 begrenzt den Raum 260 quer zur Befestigungsrichtung 210, so dass der erste Gegenstand 201 im Falle von Ausgleichsbewegungen gegenüber der Vorrichtung 220 an den Stützbund 270 und nicht an den übrigen Schaft 240 anstösst. Der Stützbund 270 weist in der Befestigungsrichtung 210 zur Anlagefläche 250 einen Abstand h₂ und zur Auflagefläche 250 einen Abstand h₁-h₂ auf, wobei h₂ < h₁-h₂. Dadurch stösst der erste Gegenstand 201 in der Nähe der Anlagefläche 280 an den Schaft 240, so dass die dabei auftretenden Kräfte oder Drehmomente relativ gering sind.

Der erste Gegenstand 201 umfasst vorliegend einen Gitterrost, von dem zwei zueinander parallele Gitterroststäbe mit einem Abstand b zueinander dargestellt sind, zwischen denen die Vorrichtung 220 angeordnet ist. Der Stützbund 270 hat quer zur Befestigungsrichtung 210 eine Breite a, welche das 0,7-fache des Abstands b beträgt. Darüber hinaus weist der Stützbund 270 einen Flansch 271 und an dem Flansch 271 die Anlagefläche 280 auf.

Der erste Gegenstand 201 ist unmittelbar zwischen der Auflagefläche 250 und dem Stützbund 270, vorliegend dem Flansch 271 eingeklemmt. Einer Ausgleichsbewegung des ersten Gegenstands 201 gegenüber der Vorrichtung 220 wirkt daher zunächst eine relativ kleine Kraft entgegen, nämlich die Reibungskraft aufgrund der Klemmung. Sobald der erste Gegenstand 201 an dem Stützbund 270 anstösst, wirkt der Ausgleichsbewegung eine relativ grosse Kraft entgegen, ohne dass die Vorrichtung 220 oder ihre Verbindung zu dem zweiten Gegenstand 202 beschädigt wird.

Der Schaft 240 umfasst ein Befestigungsteil 241 für eine unmittelbare Befestigung an dem zweiten Gegenstand, wie beispielsweise einen Nagel, eine Schraube, einen Dübel oder einen Gewindebolzen, und ein von dem Befestigungsteil 241 separates Anbauteil 242 für eine unmittelbare Befestigung an dem Befestigungsteil 241, beispielsweise durch Aufschrauben. Vorliegend weist das Befestigungsteil 241 den Stützbund 270 auf. Der Stützbund 270 weist quer zur Befestigungsrichtung 210 einen kreisringförmigen Umfang auf.

Die Erfindung wurde anhand von Beispielen einer Vorrichtung zur Befestigung eines ersten Gegenstandes an einem zweiten Gegenstand beschrieben. Die Merkmale der beschriebenen Ausführungsformen sind dabei auch beliebig miteinander innerhalb einer einzigen Befestigungsvorrichtung kombinierbar. Es wird darauf hingewiesen, dass die erfindungsgemässe Vorrichtung und das erfindungsgemässe Verfahren auch für andere Zwecke geeignet sind.

## Patentansprüche

1. Vorrichtung zur Befestigung eines ersten Gegenstandes an einem zweiten Gegenstand, mit einem Kopf und einem von dem Kopf in einer Befestigungsrichtung abragenden Schaft für eine unmittelbare Befestigung an dem zweiten Gegenstand, wobei der Kopf eine in die Befestigungsrichtung weisende Auflagefläche für eine Auflage auf dem ersten Gegenstand aufweist, welche in der Befestigungsrichtung nur von dem Schaft überragt wird, wobei der Schaft eine in die Befestigungsrichtung weisende Anlagefläche für eine Anlage an dem zweiten Gegenstand aufweist, **dadurch gekennzeichnet, dass** der Schaft einen den übrigen Schaft quer zur Befestigungsrichtung überragenden Stützbund aufweist, welcher in der Befestigungsrichtung zur Anlagefläche einen kleineren Abstand aufweist als zur Auflagefläche.

2. Vorrichtung nach Anspruch 1, wobei die Auflagefläche den Stützbund quer zur Befestigungsrichtung überragt.

3. Vorrichtung nach einem der vorhergehenden Ansprüche, wobei der Schaft ein Befestigungsteil für eine unmittelbare Befestigung an dem zweiten Gegenstand und ein von dem Befestigungsteil separates Anbauteil für eine unmittelbare Befestigung an dem Befestigungsteil umfasst.

4. Vorrichtung, wobei das Befestigungsteil den Stützbund aufweist.

5. Vorrichtung, wobei das Anbauteil den Stützbund aufweist.

6. Vorrichtung nach einem der vorhergehenden Ansprüche, wobei der Stützbund die Anlagefläche aufweist.

7. Vorrichtung nach einem der vorhergehenden Ansprüche, wobei der Schaft ein Kernteil und ein das Kernteil umschliessendes Ringteil umfasst, wobei das Ringteil den Stützbund aufweist.

8. Vorrichtung nach einem der vorhergehenden Ansprüche, wobei der Stützbund quer zur Befestigungsrichtung einen kreisringförmigen Umfang aufweist.

9. System, umfassend einen ersten Gegenstand, einen zweiten Gegenstand und eine Vorrichtung, wobei der erste Gegenstand mittels der Vorrichtung in einer Befestigungsrichtung an dem zweiten Gegenstand befestigt ist, wobei die Vorrichtung einen Kopf und einen von dem Kopf in der Befestigungsrichtung abragenden Schaft aufweist, wobei der Kopf eine in die Befestigungsrichtung weisende Auflagefläche aufweist, welche auf dem ersten Gegenstand aufliegt, wobei zwischen dem Schaft, der Auflagefläche, dem ersten Gegenstand und dem zweiten Gegenstand ein Raum für Ausgleichsbewegungen des ersten Gegenstands quer zur Befestigungsrichtung gebildet ist, **dadurch gekennzeichnet, dass** der Schaft einen den Raum quer zur Befestigungsrichtung begrenzenden Stützbund aufweist, welcher in der Befestigungsrichtung zur Anlagefläche einen kleineren Abstand aufweist als zur Auflagefläche.

10. System nach Anspruch 9, wobei der erste Gegenstand unmittelbar zwischen der Auflagefläche und dem zweiten Gegenstand eingeklemmt ist.

11. System nach Anspruch 9, wobei der erste Gegenstand unmittelbar zwischen der Auflagefläche und dem Stützbund eingeklemmt ist.

12. System nach einem der Ansprüche 9 bis 11, wobei der erste Gegenstand ein Gitterrost ist.

13. System nach Anspruch 12, wobei der Stützbund als grösste Ausdehnung quer zur Befestigungsrichtung eine Breite a hat und der Gitterrost zwei zueinander parallele Gitterroststäbe mit einem Abstand b zueinander aufweist, zwischen denen die Vorrichtung angeordnet ist, und wobei die Breite a kleiner als der Abstand b ist.

14. System nach Anspruch 13, wobei die Breite a höchstens das 0,8-fache des Abstands b beträgt.

15. System nach einem der Ansprüche 13 und 14, wobei die Breite a mindestens halb so gross wie der Abstand b ist.
